Europäisches Patentamt

European Patent Office

Office européen des brevets

(11) Publication number: **0 495 343 A1**

# EUROPEAN PATENT APPLICATION

(21) Application number: **91830008.8**

(22) Date of filing: **17.01.91**

(51) Int. Cl.5: **F16H  15/52**, F16H 57/02

(43) Date of publication of application:
**22.07.92 Bulletin  92/30**

(84) Designated Contracting States:
**AT BE CH DE DK ES FR GB GR IT LI LU NL SE**

(71) Applicant: **L.B. VARIATORI SRL**
**Via Bazzane 33A**
**I-40012 Calderara di Reno(IT)**

(72) Inventor: **Bulgarelli, Claudio**
**Corso Canal Grande 88**
**Modena(IT)**

(74) Representative: **Sassatelli, Franco T., Dr.**
**c/o INIP via Ruggi 5**
**I-40137 Bologna(IT)**

(54) Epicycloidal speed variator without bearings with axial stop of the satellite bearing disk.

(57) The invented device foresees for mounting of the variator (1), without outlet supported bearing, on the reducer (2) before the application on said reducer of a cover (3) with connected screws (4). Subsequently it is mounted the variator (1), by means of screws (5), on cover (3) and it is screwed the stop grain (6) restrained the outlet satellite bearing disk (7) on fast shaft of reducer (8). The positioning push-rod (9), puts on variator (1), permits the axial positioning of the satellite bearing disk (7) and consequently gives the right positioning of the same. At the beginning of the working phase, it is occured a deformation of the push-rod (9) which stops its contact with the satellite bearing disk (7), so to avoid frictions. Moreover, it is avoided the extraction process of the positioning screw, made during assembly, because the axial positioning of the outlet satellite bearing disk is given to the reference push-rod (9).

FIG.1

The invention refers to an epicycloidal speed variator without bearings for the support of the outlet shaft completely mounted, regulated in its major and lowest speed and with oil load necessary for its operation and controllable in self-governing way, directly connected to reducers with male fast projecting shaft that principally foresees the axial stop of the satellite bearing disk. In the universality use mechanical power drive sector, and in particular for tool machines, automatic machines, belt conveyors, wood working machines and other, are used speed variators generally connected with worm gear reducers to permit the speed adjustment to the different used conditions of the machines. The traditional systems foreseed the connection realization of the reducer with the variator by means of a link flange. This connection was actuated with worm or gear reducers with fast quill shaft and flange prepared in advance for motor coupling. The European Patent Application no. 87830359.3, filed by the same present Applicant, foresees the possibility to connect the variator without outlet bearings, completely mounted, tested in its major and lowest speed and also with its oil loud necessary for operation, the the worm and gear reducers with male fast projecting shaft. This was possible by using a axial locating screw, puts on the inlet cover, that is taken out when the same variator is starting. In this way is possible to realize a basic semplification and an inexpensiveness in the building and fabrication process by means of directed connection of the variator group with the male fast projecting shaft mounted separately, consequently enabling the fabrication position change of the reducer rispect to the variator without to have proceeding to the complete disassembly of the variator group. Moreover this system enabled also a semplification by using only two spring bearings instead of four ones as previous foresses in the normal tecnology. The present device permits semplification of said assembly proceeding of the without bearing variator completely mounted, tested and regulated in its major and lowest speeds as well also with its oil load necessary for operation. Moreover it permits the relative mounting transformation between variator and recuder consequently foreseen said mounting without that was before necessary to carry out the complete disassembly of variator-reducer group and avoids, respect to the previous system, the possibility of a difficult fit between variator and reducer owing to the no-coaxial of the axial set screw that generated a over turned moment on the outlet bearing disk. Moreover the invented device permits a making cost reduction because it sostantially excludes the axial position screw, necessary in the previous device, replaced it with a small reference push-rod integrated in a pre-existing piece.

Essentially the invented device foresees for mounting of the variator 1, without outlet supported bearings, on the reducer 2 before the application on said reducer of a cover 3 with connected screws 4. Then it is mounted the variator 1, by means of screw 5, on cover 3 and it is screwed the stop grain 6 restrained the outlet satellite bearing disk 7 on fast shaft of reducer 8. The positioning push-rod 9, puts on variator 1, permits the axial positioning of the satellite bearing disk 7 and consequently gives the right positioning of the same. At the beginning of the working phase, it is occured a deformation of the push-rod 9 which stops its contact with the satellite bearing disk 7, so to avoid frictions. Moreover it is avoided the extraction process of the positioning screw, made during assembly, becuase the axial positioning of the outlet satellite bearing disk is given to the reference push-rod 9.

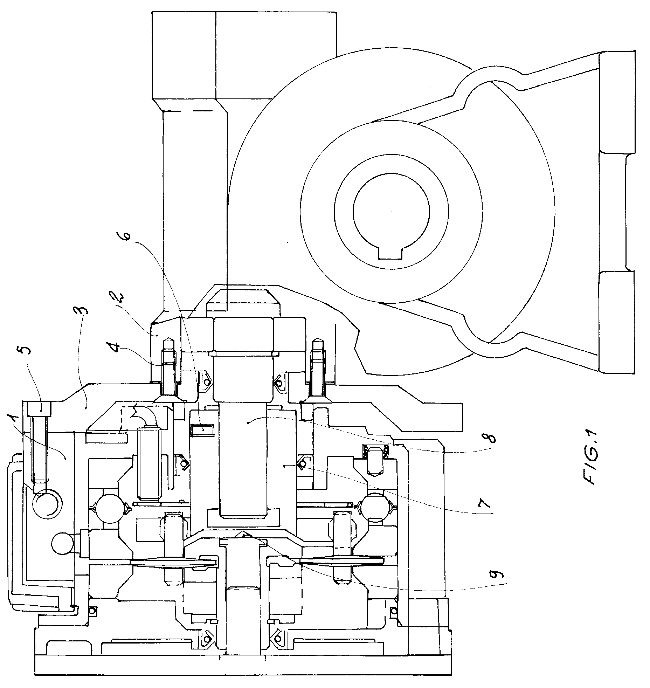

Execution version in indicative way is illustrated in the drawing of Table 1. Where fig. 1 is scheme of the fit realized on the base of the invented device. In the realization the component shapes, the constraint equipment shapes and the different materials may be foreseen in various way.

## Claims

1. Epicycloidal speed variator without bearings with axial stop of the satellite bearing disk, characterized by the fact that foresees for mounting of the variator (1), without outlet supported bearing, on the reducer (2) before the application on said reducer of a cover (3) with connected screws (4). Subsequently it is mounted the variator (1), by means of screws (5), on cover (3) and it is screwed the stop grain (6) restrained the outlet satellite bearing disk (7) on fast shaft of reducer (8). The positioning push-rod (9), puts on variator (1), permits the axial positioning of the satellite bearing disk (7) and consequently gives the right positioning of the same. At the beginning of the working phase it is occured a deformation of the push-rod (9) which stops its contact with the satellite bearing disk (7), so to avoid frictions. Moreover it is avoided the extraction process of the positioning screw, made during assembly, because the axial positioning of the outlet satellite bearing disk is given to the reference push-rod (9).

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0311734 (L.B.TRASMISSIONI MECCANICHE SRL) <br> * the whole document * <br> --- | 1 | F16H15/52 <br> F16H57/02 |
| A | FR-A-1396355 (BERTHOLET) <br> * the whole document * <br> ----- | 1 | |

| | | | TECHNICAL FIELDS SEARCHED (Int. Cl.5) |
|---|---|---|---|
| | | | F16H |

The present search report has been drawn up for all claims

| Place of search | Date of completion of the search | Examiner |
|---|---|---|
| THE HAGUE | 04 SEPTEMBER 1991 | VAN PROOIJEN T. |